(19) **Europäisches Patentamt**

**European Patent Office**

**Office européen des brevets**

(11) Publication number: **0 465 183 B1**

(12) **EUROPEAN PATENT SPECIFICATION**

(45) Date of publication of patent specification: **19.04.95**

(51) Int. Cl.⁶: **F01N 3/20**, H05B 3/14

(21) Application number: **91305926.7**

(22) Date of filing: **01.07.91**

The file contains technical information submitted after the application was filed and not included in this specification

(54) **Catalytic converter with resistance heater.**

(30) Priority: **29.06.90 JP 172929/90**
**29.06.90 JP 172930/90**
**29.06.90 JP 172931/90**
**25.07.90 JP 196511/90**

(43) Date of publication of application:
**08.01.92 Bulletin 92/02**

(45) Publication of the grant of the patent:
**19.04.95 Bulletin 95/16**

(84) Designated Contracting States:
**DE FR GB**

(56) References cited:
**EP-A- 0 355 489**
**WO-A-89/10471**
**DE-A- 2 333 092**
**DE-B- 1 188 373**
**GB-A- 2 049 377**

(73) Proprietor: **NGK INSULATORS, LTD.**
**2-56, Suda-cho, Mizuho-ku**
**Nagoya-shi, Aichi 467 (JP)**

(72) Inventor: **Harada, Takashi**
**248, Ohbari 1-chome,**
**Meitou-ku**
**Nagoya-city,**
**Aichi-prefecture 465 (JP)**
Inventor: **Abe, Fumio**
**1-29, Souga-cho,**
**Handa-city**
**Aichi-prefecture 475 (JP)**
Inventor: **Mizuno, Hiroshige**
**22, Sakaue-cho 8-chome,**
**Tajimi-city**
**Gifu-prefecture 507 (JP)**

(74) Representative: **Stoner, Gerard Patrick et al**
**MEWBURN ELLIS**
**York House**
**23 Kingsway**
**London WC2B 6HP (GB)**

Rank Xerox (UK) Business Services
(3.10/3.09/3.3.3)

## Description

The present invention relates to a resistance adjusting type heater and catalytic converter which are suitable for use in automotive exhaust emissions control.

Conventionally, porous ceramic honeycomb structures have been employed as catalysts or substrates for catalysts which remove, for example, nitrogen oxides (NOx), carbon monoxide (CO) and hydrocarbon (HC) present in the exhaust gas of internal combustion engines, such as automobiles. Recently, however, metal honeycomb structures have been drawing attention as such catalysts or substrates for catalyst.

Apart from the above catalysts or catalyst substrates, as restriction of exhaust emissions has been intensified, there has been a demand for development of heater or catalytic converters capable of converting the emissions when operation of an engine is started.

Catalytic converters for use in controlling automotive exhaust gas have a minimum operating temperature above which the catalyst is active.

Hence, the catalyst must be heated when the temperature thereof is not sufficiently high, i.e., at the beginning of running of a vehicle.

Such honeycomb structures have been proposed in, for example, Japanese Utility Model Laid-Open No. 67609/1988. This disclosed technique is a catalytic converter comprised of a metal monolithic catalyst which is disposed upstream of and adjacent to a main ceramic monolithic catalyst. The metal monolithic catalyst comprises an electrically conductible metal substrate with alumina coated thereon.

However, in the catalytic converter disclosed in Japanese Utility Model Laid-Open No. 67609/1988, the metal monolithic catalyst, a preheater, disposed upstream and adjacent to the main monolithic catalyst comprises a foil-type metal honeycomb structure which is constructed such that it is conducted and thereby heated from the inner periphery thereof to the outer periphery thereof. The resistance of the metal monolithic catalyst is not adjusted (i.e., only the material, dimensions and rib thickness of the metal honeycomb structure are defined and no adjustment is made on the resistance of the metal honeycomb structure). Furthermore, since the diameter of the metal monolithic catalyst is substantially the same as that of the main monolithic catalyst, the catalytic converter exhibits insufficient temperature rising characteristics.

WO89/10471 discloses an electrically conductive honeycomb body of metal sheets, in which the honeycomb is divided by gaps and/or electrically insulating layers or coatings to provide an electric current path of a desired resistance. The body is described as being suitable for use as a catalyst support in motor vehicles.

The problem addressed herein is to provide a novel resistance adjusting type heater and catalytic converter, preferably to eliminate the aforementioned problems of the prior techniques.

The present invention is set out in claim 1.

Preferably, the heater has a diameter larger than that of the main monolithic catalyst.

A honeycomb heater having a resistance adjusting means or mechanism, such as a slit or slits, between the electrodes exhibits excellent heating characteristics and is therefore employed. Preferably, a honeycomb structure employed in the present invention is manufactured by forming metal powders into a honeycomb configuration and then by sintering a formed honeycomb body.

Preferably, the honeycomb heater comprises a honeycomb structure with a catalyst carried thereon.

Figs. 1 and 2 are respectively plan views of two types of honeycomb heaters having different outer diameters;

Figs. 2(a) and 2(b) are respectively cross-sectional views of catalytic converters employing the different types of honeycomb heaters having different outer diameters in each of which a honeycomb heater is disposed upstream of a main monolithic catalyst;

Fig. 3 is a perspective view of a catalytic converter whose outer peripheral portion is sealed by a heat insulating material;

Fig. 4 is a plan view of an example of a honeycomb heater with a catalyst carried thereon, which is employed in the present invention.

The resistance adjusting type heater embodying the present invention comprises a honeycomb structure with at least two electrodes provided thereon to supply a current to the honeycomb structure and with a resistance adjusting means provided between the electrodes. The resistance adjusting means is provided such that the cross-section of a heating portion of the heater is substantially the same as that of the main monolithic catalyst provided together the heater.

When the resistance is adjusted in the manner described above, it is possible to control the heating characteristics of the heater.

Preferably, the portion of the heater other than the heating portion is sealed by a heat insulating material or the like to prevent an exhaust gas from flowing along that portion and thereby making the

EP 0 465 183 B1

exhaust gas flow only along the heating portion of the heater. In this way, the exhaust gas can be heated quickly. In that case, the electrodes do not make contact with the exhaust gas, corrosion of the electrodes due to the exhaust gas can be eliminated.

Whereas any material, ceramic or metal, capable of generating heat when energized, can be used as the material of the honeycomb structure which is a basic body of the present invention, the use of metal enhances the mechanical strength and is thus preferred. Examples of such metals include stainless steel and materials having compositions of Fe-Cr-Aℓ, Fe-Cr, Fe-Aℓ, Fe-Ni, W-Co, and Ni-Cr. Among the above materials, Fe-Cr-Aℓ, Fe-Cr and Fe-Aℓ are preferred because of low cost and high resistance to heat, oxidation and corrosion. The honeycomb structure employed in the present invention may be porous or non-porous. In the case where a catalyst is carried on the honeycomb structure, however, a porous honeycomb structure is preferred because a catalyst layer can be closely adhered to such a honeycomb structure, and hardly peels off the honeycomb structure even when a difference in the thermal expansion between the honeycomb structure and the catalyst exists.

The metal honeycomb structure will be prepared in the manner described below.

First, Fe powder, Aℓ powder and Cr powder, or alternatively powders of alloys of these metals, are mixed to prepare a metal powder mixture having a desired composition. Subsequently, the metal powder mixture is blended into an organic binder, such as methyl cellulose or polyvinylalcohol, and water to produce a readily formable mixture. That mixture is then formed into a shape of a desired honeycomb configuration by extrusion.

Next, the formed honeycomb body is fired in a non-oxidizing atmosphere at a temperature ranging between 1000 and 1450°C. During the sintering in the non-oxidizing atmosphere containing hydrogen, the organic binder is decomposed and thereby removed with the aid of Fe or the like, which acts as a catalyst. A good sintered body (a honeycomb structure) can therefore be obtained.

Sintering at a temperature lower than 1000°C achieves no sintering. Sintering conducted at a temperature higher than 1450°C causes deformation of the resulting sintered body and is thus undesirable.

Preferably, a heat-resistant metal oxide is then coated on the surface of the cell walls and the surface of the pores of the obtained honeycomb structure.

Next, a resistance adjusting mechanism of a desired form is preferably provided on the obtained honeycomb structure between the electrodes thereof, which will be described later.

The resistance adjusting mechanism provided on the honeycomb structure may take on any of the following forms:

(1) a slit or slits of any length, formed in any direction at any position
(2) variations in the length of the cell walls in the axial direction of the passages
(3) variations in the thickness (wall thickness) of the cell walls of the honeycomb structure or variations in the cell density of the honeycomb structure, or
(4) a slit or slits formed in the cell wall (rib) of the honeycomb structure.

Among the above-mentioned forms, formation of a slit or slits according to No.(1) is more preferable because it can easily control a heated portion.

Electrodes are provided generally on the outer peripheral portion of or inside of the thus-obtained metal honeycomb structure by welding or brazing to manufacture a honeycomb heater.

The term, "electrodes" is used in this application to refer to any terminal through which a voltage is applied to the heater. The electrodes include the direct bonding of the outer peripheral portion of the heater to a can body and terminals for grounding.

In the case of the metal honeycomb structure which is used as a heater, the resistance thereof will be preferably held between 0.001Ω and 0.5Ω.

Preferably, a catalyst is placed on the surface of the thus-obtained metal honeycomb structure so as to allow heat to be generated due to reaction (oxidation) of the exhaust gas.

Thus catalyst supported on the surface of the metal honeycomb structure is made of a carrier having a high surface area and a catalyst activating material supported on the carrier. Typical examples of the carriers having a high surface area include $\gamma$-Aℓ$_2$O$_3$, TiO$_2$, SiO$_2$-Aℓ$_2$O$_3$ and perovskite. Examples of the catalytic activating material include noble metals, such as Pt, Pd and Rh, and base metals, such as Cu, Ni, Cr and Co. The preferred catalyst comprises one in which from 10 to 100g/ft$^3$ Pt or Pd is loaded on the carrier made of $\gamma$-Aℓ$_2$O$_3$.

Whereas the honeycomb structure employed in the present invention may have any honeycomb configuration, it is desirable that the cell density ranges from 6 to 1500cells/in$^2$ (0.9 to 233cells/cm$^2$) with a wall thickness ranging from 50 to 2000$\mu$m.

As stated above, the honeycomb structure employed in the present invention may be porous or non-porous. To achieve sufficient mechanical strength and resistance to oxidation and corrosion, however, the

3

porosity of the metal honeycomb structure will preferably be held between 0 and 50% by volume with most preferable porosity being less than 25% by volume. In a metal honeycomb structure designed for use as a substrate for catalyst, the porosity will be held 5% or above to ensure strong adhesion between the honeycomb structure and a catalyst layer.

The term, "honeycomb structure" is employed in this application to refer to an integral body having a large number of passages partitioned by the walls. The passages may have any cross-sectional form (cell shape), e.g., a circular, polygonal or corrugated form.

The present invention will further be illustrated in the following examples which are intended to be illustrative, but not limiting, of this invention.

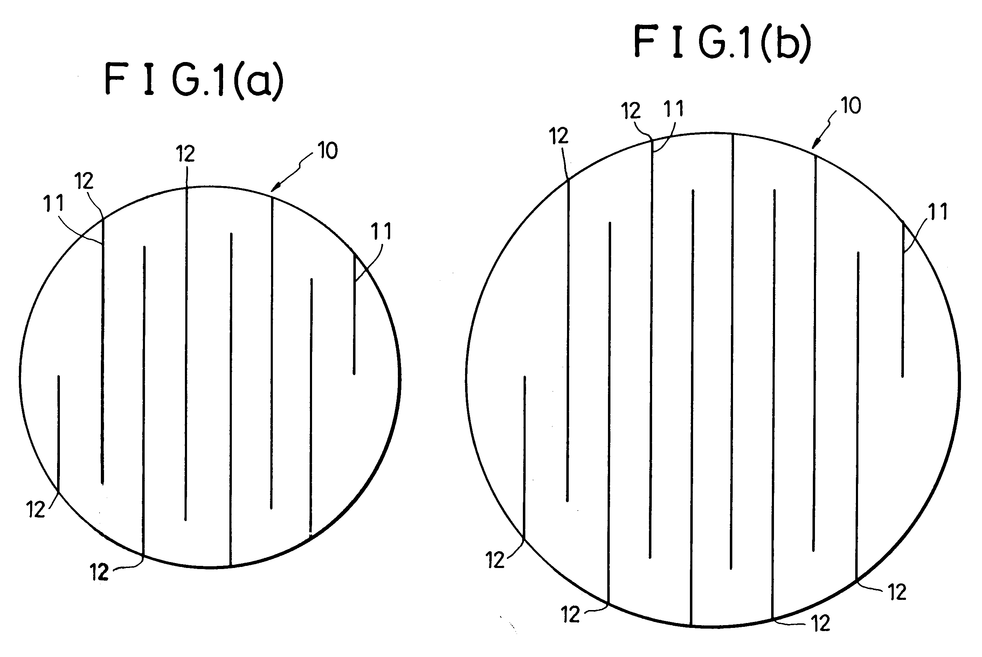

Figs. 1(a) and 1(b) are respectively plan views of different types of honeycomb heaters respectively having an outer diameter of 90mm$\phi$ and 120mm$\phi$. In each honeycomb heater, a plurality of slits 11, which act as the resistance adjusting mechanisms, are provided in a honeycomb structure 10 having a large number of passages. An outer peripheral portion 12 of each slit 11 is charged with and thereby electrically insulated by an inorganic adhesive. Two electrodes are provided on the outer wall of the honeycomb structure 10 to make it a honeycomb heater.

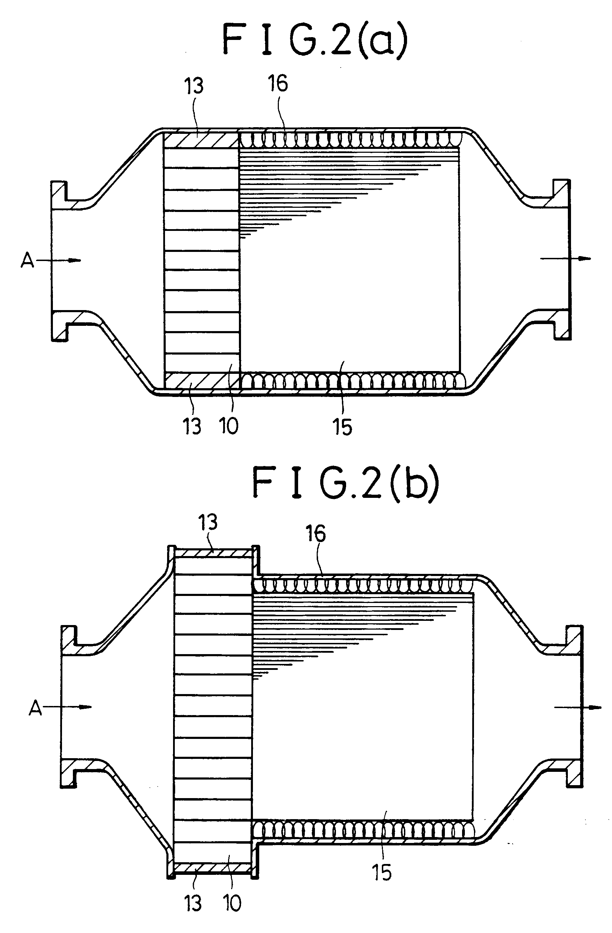

Figs. 2(a) and 2(b) respectively show catalytic converters employing two different types of honeycomb heaters 10 respectively having an outer diameter of 90mm$\phi$ and 120mm$\phi$. In each catalytic converter, the honeycomb heater 10 is disposed upstream of a main monolithic catalyst 15. A reference numeral 16 denotes an outer frame.

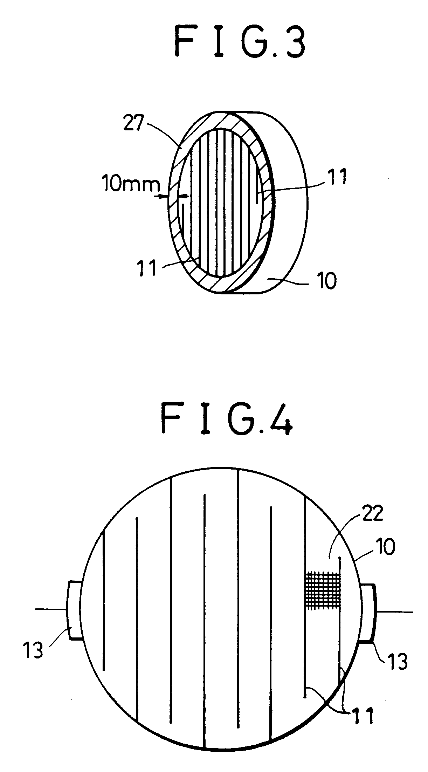

Fig. 4 is a plan view of an example of a honeycomb heater with a catalyst carried thereon according to the present invention. This honeycomb heater comprises a honeycomb structure 10 with a plurality of slits 11 formed therein as resistance adjusting means and with two electrodes 13 provided on the outer wall thereof. The honeycomb structure 10 has a large number of passages 22.

## Example 1

Fe powder, Fe-Cr powder and Fe-Aℓ powder were mixed to prepare a mixture having a composition of Fe-20Cr-5Aℓ (% by weight). The obtained mixture was then formed by the extrusion into honeycomb bodies. The formed honeycomb bodies were sintered in $H_2$ atmosphere to obtain honeycomb structures respectively having an outer diameter of 90mm$\phi$ and 120mm$\phi$. Both honeycomb structures had a thickness of 15mm, a cell wall (rib) thickness of 4mil (0.10mm) and a passage density of 400 cells/in$^2$(cpi$^2$). Thereafter, slits 11 were formed in the obtained honeycomb structures 10 having a large number of passages, as shown in Figs. 1(a) and 1(b). The outer peripheral portion 12 of each slit 11 was filled with an inorganic adhesive of $ZrO_2$. The slits 11 were formed in such a manner that they were separated from each other by a distance corresponding to eight cell walls, i.e., seven cells.

A layer of $\gamma$-alumina in which $CeO_2$ was present in a proportion of 8wt% was coated on each of the honeycomb structures 10. Thereafter, 20g/ft$^3$ of Pd and Pt were respectively loaded on the coated layer. The whole structure was then sintered at 600°C to obtain a catalyst. Subsequently, two electrodes 13 were provided on the outer wall of each of the obtained honeycomb structures 10, as shown in Figs. 2(a) and 2-(b). Each of the obtained honeycomb heaters was disposed in front of a a three-way catalyst 14 available on the market which was a main monolithic catalyst, as shown in Figs. 2(a) and 2(b). The three-way catalyst 15 had a rib thickness of 6mil, a passage density of 400cells/in$^2$, an outer diameter of 90mm$\phi$ and a length of 100mm.

An outer peripheral portion 27 of the heater having an outer diameter of 120mm$\phi$ was sealed by a heat insulating material over a width of 10mm so that no exhaust gas flows therethrough, as shown in Fig. 3.

The diameter of the heating portion of the heater having an outer diameter of 90mm$\phi$ was about 70mm$\phi$, and the diameter of the heater portion of the heater having an outer diameter of 120mm$\phi$ was about 90mm$\phi$.

The performance of each of these catalytic converter systems at the beginning of the operation of an engine was tested by introducing into the system an exhaust gas (A/F = 14.6) whose temperature was raised at a fixed speed from 100°C to 420°C for two minutes and was then maintained at 420°C for one minute and by measuring the conversion for CO, HC and NO$_x$. At that time, the heater was first energized for five seconds by a battery of 24V and then turned on and off so as to maintain the temperature thereof to 450°C. While the heater was on, it was energized by a battery of 12V.

The following table 1 shows the results of these measurements.

Table 1

| Heater | Average conversion (%) | | |
|---|---|---|---|
| | CO | HC | $NO_x$ |
| 90 mm$\phi$ | 68 | 53 | 66 |
| 120 mm$\phi$ | 72 | 58 | 70 |

As is clear from the above Table, since the heater having an outer diameter of 120mm$\phi$ has substantially the same heating area as that of the main monolithic catalyst disposed at the rear of (downstream of) the heater, the entirety of the main monolithic catalyst can be heated relatively uniformly. Furthermore, since a wider area of the catalyst carried on the heater can be heated, conversion can be performed efficiently, resulting in an increase in the conversion.

**Example 2**

Fe powder, Fe-Cr powder and Fe-Aℓ powder were mixed to prepare a mixture having a composition of Fe-20Cr-5Aℓ (% by weight), and the obtained mixture was then formed by the extrusion into a honeycomb body. The formed honeycomb body was then sintered at an atmosphere of $H_2$ to obtain a honeycomb structure having an outer diameter of 93mm$\phi$, a thickness of 15mm, a cell wall (rib) thickness of 8mil and a passage density of 300cells/in$^2$. Thereafter, eight slits 11, six of which had a length of about 70mm while two of them located at the two sides had a length of about 50mm, were formed in the obtained honeycomb structure 10 in the axial direction of the passages 22 thereof in such a manner they were separated from each other by a distance corresponding to seven cells (about 10mm), i.e., seven cells were disposed between the adjacent slits 11, as shown in Fig. 4.

A layer of $\gamma$-alumina was coated on the honeycomb structure 10. Thereafter, 10g/ft$^3$ of Pd and Pt were respectively loaded on the coated layer. The whole structure was then sintered at 600°C to generate a catalyst. Subsequently, two electrodes 13 were provided on the outer wall of the obtained honeycomb structure 10 to make it a heater catalyst 14, as shown in Fig. 4.

The obtained heater catalyst 14 was disposed at the rear of (downstream of) a three-way catalyst 15 available on the market which was a main monolithic catalyst, and a light-off catalyst 21 which was an oxidation catalyst was provided at the rear of the heater catalyst 14, as shown in Fig. 5.

The performance of this system at the beginning of the operation of an engine was tested by introducing into this system an exhaust gas A whose temperature was raised at a same rate from 100 °C to 420 °C for two minutes and was then maintained at 420 °C for one minute (warming-up test) and by measuring the conversion for CO, HC and $NO_x$. Table 2 shows the results of the measurements. At the beginning of the test, the heater catalyst 14 was energized for one minute by a battery of 12 V in order to heat the exhaust gas to 350 °C.

Next, the durability test was conducted on the above system in the manner described bellow: the temperature of an exhaust gas was raised from the room temperatures to 750°C, and then maintained at 750 °C, a cyclic operation was repeated in which the engine was cruised for 60 seconds and then introduction of the fuel was cut for 5 seconds. At the beginning of the durability test, the heater catalyst 14 was energized for one minute in the same manner as that in which it was energized in the above measurements in order to heat the exhaust to 350 °C.

After this durability test was performed ten times, the warming-up test was conducted and the conversion for CO, HC and $NO_x$ was measured.

For comparison, the durability test was conducted on a system in which the heater catalyst 14 was disposed in front of the main monolithic catalyst 15, as shown in Fig. 9.

Table 2 shows the average conversion obtained by the system according to the present invention before and after the durability test and that obtained by the comparative example after the durability test.

Table 2

| Average conversion (%) (warming-up test) | | | |
|---|---|---|---|
| | CO | HC | NO$_x$ |
| Before the durability test | 68 | 53 | 66 |
| After the durability test (The Present invention) | 60 | 46 | 61 |
| After the durability test (Comparative example) | 46 | 41 | 47 |

**Example 3**

Fe powder, Fe-Cr powder and Fe-Aℓ powder were mixed to prepare a mixture having a composition of Fe-20Cr-5Aℓ (% by weight). The obtained mixture was then formed by the extrusion into a honeycomb body. The formed honeycomb body was sintered at an atmosphere of H$_2$ to obtain a honeycomb structure having an outer diameter of 93mmφ, a length of 15mm, a cell wall (rib) thickness of 8mil and a passage density of 300 cells/in$^2$. Thereafter, eight slits 11, six of which had a length of about 70mm while two of them located at the two sides had a length of about 50mm, were formed in the obtained honeycomb structure 10 in the axial direction of passages 22 thereof in such a manner they were separated from each other by a distance corresponding to four cells (about 8mm), i.e., four cells were disposed between the adjacent slits 11, as shown in Fig. 4.

A layer of γ-alumina was coated on the honeycomb structure 10. Thereafter, 10g/ft$^3$ of Pd and Pt were respectively loaded on the coated layer. The whole structure was then sintered at 600°C to generate a catalyst. Subsequently, two electrodes 13 were provided on the outer wall of the obtained honeycomb structure 10, as shown in Fig. 4, to make it a heater catalyst 14.

The obtained heater catalysts 14 were respectively disposed in front of (upstream of) and at the rear of (downstream of) a three-way catalyst 15 available on the market which was a main monolithic catalyst, as shown in Fig. 10.

The performance of this system at the beginning of the operation of an engine was tested by introducing into this system an exhaust gas A whose temperature was raised at a same rate from 100°C to 420°C for two minutes and was then maintained at 420°C for one minute (warming-up test) and by measuring the conversion for CO, HC and NO$_x$. At the beginning of the test, the heater catalysts 14 disposed in front of and at the rear of the main monolithic catalyst 15 were energized for one minute by a battery of 12V in order to heat the exhaust gas to 350°C.

For comparison, warming-up test was conducted under the same conditions as those of the above case on a catalytic converter system in which the heater catalyst was disposed only at the rear of the main monolithic catalyst 15.

Table 3 shows the results of these measurements.

Next, the durability test was conducted in the same manner described as in Example 2.

After this durability test was performed ten times, the above-described warming-up test was conducted and the conversion for CO, HC and NO$_x$ was measured.

For comparison, the durability test was conducted under the same conditions as those of the above case on a system in which the heater catalyst 14 was disposed in front of the main monolithic catalyst 15.

Table 4 shows the results of the measurements.

Table 3

| Average conversion (%) (warming-up test) | | | |
|---|---|---|---|
| | CO | HC | NO$_x$ |
| The present invention | 68 | 53 | 64 |
| Comparative example | 63 | 48 | 61 |

6

Table 4

| Average conversion (%) (warming-up test conducted after the durability test) | | | |
|---|---|---|---|
| | CO | HC | NO$_x$ |
| The present invention | 62 | 49 | 62 |
| Comparative example | 48 | 41 | 46 |

## Example 4

Fe powder, Fe-Cr powder and Fe-Aℓ powder were mixed to prepare a mixture having a composition of Fe-20Cr-5Aℓ (% by weight). The obtained mixture was then formed by the extrusion into a honeycomb body. The formed honeycomb body was sintered in H$_2$ atmosphere to obtain a honeycomb structure having an outer diameter of 93mmφ, a thickness of 15mm, a cell wall (rib) thickness of 8mil and a cell density of 300cells/in$^2$. Thereafter, eight slits 11, six of which had a length of about 70mm while two of them located at the two sides had a length of about 50mm, were formed in the obtained honeycomb structure 10 in the axial direction of passages 22 thereof, as shown in Fig. 4, in such a manner that they were separated from each other by a distance corresponding to seven cells (about 10mm).

A layer of γ-alumina was coated on the honeycomb structure 10. Thereafter, 20g/ft$^3$ of Pd and Pt were respectively loaded on the coated layer. The whole structure was then sintered at 600°C to generate a catalyst. Subsequently, two electrodes 13 were provided on the outer wall of the obtained honeycomb structure 10, as shown in Fig. 4, to make it a heater catalyst 14.

The obtained heater catalyst 14 was incorporated in the catalytic converter within the first flow passage 20 disposed in front of (upstream of) the three-way catalyst which was the main monolithic catalyst 15, as shown in Fig. 13. This catalytic converter further included the bypassing flow passage 23 through which a high-temperature exhaust gas A flew, the change-over valve 18 at a bifurcated portion 17, and a temperature sensor 19 upstream of the change-over valve 18. When the temperature of the exhaust gas reached a high value (e.g., 350°C), the flow of the exhaust gas was controlled such that it did not flow through the heater catalyst 14 by operating the change-over valve 18.

The performance of the catalytic converter system at the beginning of the operation of an engine was tested by the same manner as in Example 1, and the conversion for CO, HC and NO$_x$ was measured. Until the temperature of the exhaust gas reached 350°C, the exhaust gas was introduced into the first flow passage 20. When the temperature exceeded 350°C, the valve 18 was operated to introduce the exhaust gas into the main monolithic catalyst 15. At the beginning of the test, the heater catalyst was energized for one minute by a battery of 12V in order to heat the exhaust gas to 350°C.

Next, the durability test was conducted on the above system in the same manner as in Example 2.

After this durability test was performed ten times, the warming-up test was conducted and the conversion for CO, HC and NO$_x$ was measured.

For comparison, the durability test was conducted in which the valve 18 was not operated and all the exhaust gas was introduced to the heater catalyst 14.

Table 5 shows the average conversion obtained by the system according to the present invention before and after the durability test and that obtained by the comparative example after the durability test.

Table 5

| Average conversion (%) (warming-up test) | | | |
|---|---|---|---|
| | CO | HC | NO$_x$ |
| Before the durability test | 70 | 54 | 67 |
| After the durability test (Present invention) | 61 | 48 | 60 |
| After the durability test (Comparative example) | 48 | 41 | 46 |

As will be understood from the foregoing description, in the heater and catalytic converter according to the present invention, since the resistance adjusting means is formed on the heater such that the heating portion thereof is substantially the same as the cross-section of the main monolithic catalyst provided together with the heater, the overall main monolithic catalyst can be heated by the heater relatively uniformly. Furthermore, since a wider area of the catalyst carried on the heater can be heated, conversion can be performed efficiently.

In another catalytic converter according to the present invention, the honeycomb heater is provided downstream of the main monolithic catalyst. In consequence, an exhaust gas whose temperature is low can be heated by the honeycomb heater at the beginning of operation of the engine. Furthermore, corrosion of the honeycomb heater or deterioration of the catalyst carried on the honeycomb heater, caused by the high-temperature exhaust gas, can be suppressed to a minimum due to the main monolithic catalyst provided upstream of the honeycomb heater.

In the case of the catalytic converter of the present invention which employs a module composed of a catalyzed light-off honeycomb heater or of the honeycomb heater and the light-off monolith catalyst, a deteriorated module can be replaced with a new one. This enables the life of the catalytic converter to be prolonged.

In still another type catalytic converter according to the present invention, the honeycomb heaters are respectively disposed upstream and downstream of the main monolithic catalyst. In consequence, an exhaust gas whose temperature is low can be heated by the honeycomb heaters at the beginning of operation of the engine. Furthermore, even when the catalyst carried on the heater disposed upstream of the main monolithic catalyst deteriorates during the use, the exhaust gas conversion performance at the beginning of operation of the engine can be assured by the honeycomb heater disposed downstream of the main monolithic catalyst.

In a still further catalytic converter according to the present invention, since the flow passage for the exhaust gas is switched over in accordance with the temperature of the exhaust gas, only the exhaust gas whose temperature is low flows through the honeycomb heater or heater catalyst which serves as a preheater. In consequence, corrosion of the metal substrate of the honeycomb heater or deterioration in the catalyst carried on the heater catalyst, both of which cause reduction in the low-temperature exhaust gas conversion performance, can be suppressed.

## Claims

1. A catalytic converter for a fluid flow having at least one main monolithic catalyst (15) for said fluid flow and a resistance heater (10) arranged in use in said fluid flow and having an electrically conductive honeycomb structure having axial end faces and a large number of parallel passages for the fluid flow extending in an axial direction and defined by partition walls and at least two electrodes for passing electrical current through said honeycomb structure, characterized in that said honeycomb structure is monolithic and has at least one slit (11) extending through it from a said axial end face so as to affect its electrical resistance between said electrodes and in that the cross-sectional area of the fluid-heating portion of the heater in a plane perpendicular to the axial direction is the same as the area of the cross-section perpendicular to the fluid flow of the main monolithic catalyst.

2. A catalytic converter according to claim 1 wherein said heater (10) has a larger diameter than said main monolithic catalyst (15).

3. A catalytic converter according to claim 1 or claim 2 wherein honeycomb structure of said heater (10) carries a catalyst.

4. A catalytic converter according to any one of claims 1 to 3 wherein said heater (10) is upstream of said main monolithic catalyst (15) in said fluid flow.

5. A catalytic converter according to claim 1 or claim 2 wherein said heater (10) is downstream of said main monolithic catalyst (15) in said fluid flow and carries a catalyst.

## Patentansprüche

1. Katalytischer Konverter für einen Fluidfluß mit zumindest einem monolithischen Hauptkatalysator (15) für den Fluidfluß und einer Widerstandsheizeinrichtung (10), die in Verwendung im Fluidfluß angeordnet ist und eine elektrisch leitende Bienenwabenstruktur mit axialen Endflächen und einer großen Zahl paralleler und durch Trennwände definierte Durchgänge in axialer Richtung für den Fluidfluß und zumindest zwei Elektroden zum Durchführen von elektrischem Strom durch die Bienenwabenstruktur aufweist, dadurch gekennzeichnet, daß die Bienenwabenstruktur monolithisch ist und zumindest einen Schlitz (11) aufweist, der sich durch sie von einer der axialen Endflächen hindurch erstreckt, um ihren elektrischen Widerstand zwischen den Elektroden zu beeinflussen, und dadurch, daß die Querschnittsfläche des fluiderwärmenden bzw. -erhitzenden Teils der Heizeinrichtung in einer zur axialen Richtung rechtwinkeligen Ebene die gleiche ist wie die Querschnittsfläche rechtwinkelig zum Fluidfluß des monolithischen Hauptkatalysators.

2. Katalytischer Konverter nach Anspruch 1, worin die Heizeinrichtung (10) einen größeren Durchmesser als der monolithische Hauptkatalysator (15) aufweist.

3. Katalytischer Konverter nach Anspruch 1 oder 2, worin die Bienenwabenstruktur der Heizeinrichtung (10) einen Katalysator trägt.

4. Katalytischer Konverter nach einem der vorhergehenden Ansprüche, worin die Heizeinrichtung (10) stromaufwärts vom monolithischen Katalysator (15) im Fluidfluß ist.

5. Katalytischer Konverter nach Anspruch 1 oder 2, worin die Heizeinrichtung (10) stromabwärts vom monolithischen Hauptkatalysator (15) im Fluidfluß ist und einen Katalysator trägt.

**Revendications**

1. Convertisseur catalytique pour un écoulement de fluide ayant au moins un catalyseur monolithique principal (15) pour ledit écoulement de fluide et un réchauffeur à résistance (10) agencé en utilisation dans ledit écoulement de fluide et ayant une structure électriquement conductrice en nid d'abeille ayant des faces extrêmes axiales et un grand nombre de passages parallèles pour l'écoulement de fluide s'étendant dans une direction axiale et définis par des parois de séparation et au moins deux électrodes pour le passage du courant électrique à travers ladite structure en nid d'abeille, caractérisé en ce que ladite structure en nid d'abeille est monolithique et a au moins une fente (11) qui la traverse à partir d'une face extrême axiale afin d'affecter sa résistance électrique entre lesdites électrodes et en ce que l'aire en section transversale de la portion chauffant le fluide du réchauffeur dans un plan perpendiculaire à la direction axiale est la même que l'aire de la section transversale perpendiculaire à l'écoulement du fluide du catalyseur monolithique principal.

2. Convertisseur catalytique selon la revendication 1, où ledit réchauffeur (10) a un plus grand diamètre que ledit catalyseur monolithique principal (15).

3. Convertisseur catalytique selon la revendication 1 ou la revendication 2, où la structure en nid d'abeille dudit réchauffeur (10) porte un catalyseur.

4. Convertisseur catalytique selon l'une quelconque des revendications 1 à 3, où ledit réchauffeur (10) est en amont dudit catalyseur monolithique principal (15) dans ledit écoulement de fluide.

5. Convertisseur catalytique selon la revendication 1 ou la revendication 2, où ledit réchauffeur (10) est en aval dudit catalyseur monolithique principal (15) dans ledit écoulement de fluide et il porte un catalyseur.

# FIG.1(a)

# FIG.1(b)

EP 0 465 183 B1

# F I G.2(a)

# F I G.2(b)

# FIG.3

# FIG.4